# EUROPEAN PATENT SPECIFICATION

(11) **EP 3 375 159 B1**
(45) Date of publication and mention of the grant of the patent: **18.03.2020**
(21) Application number: 16788852.8
(22) Date of filing: 11.10.2016
(51) Int. Cl.: H04L 29/06, G06F 21/56, G06F 21/55, G06F 21/57

(54) **DYNAMIC HONEYPOT SYSTEM**
DYNAMISCHES HONIGTOPFSYSTEM
SYSTÈME DE SERVEUR LEURRE DYNAMIQUE

(30) Priority: 09.11.2015 US 201514935522
(43) Date of publication of application: 19.09.2018
(73) Proprietor: Qualcomm Incorporated, San Diego, CA 92121-1714 (US)
(72) Inventor: AHMADZADEH, Seyed Ali, San Diego, California 92121-1714 (US); ISLAM, Nayeem, San Diego, California 92121-1714 (US); CHRISTODORESCU, Mihai, San Diego, California 92121-1714 (US); GUPTA, Rajarshi, San Diego, California 92121-1714 (US); DAS, Saumitra Mohan, San Diego, California 92121-1714 (US)
(74) Representative: Wegner, Hans
(86) International application number: PCT/US2016/056438
(87) International publication number: WO 2017/083043

(56) References cited:
- EP-A2- 2 610 776
- US-A1- 2005 166 072
- US-A1- 2013 145 465

## Description

### BACKGROUND

"Honeypot systems" (or simply "honeypots") are computer systems purposefully deployed to be probed, attacked, and compromised by malicious software in order find, identify, and characterize such software. Typical honeypot systems are locked-down to confine malicious software to controlled functionalities of the systems without enabling the malicious software to launch further, uncontrollable attacks. Typical honeypot systems are capable of extensive system and application monitoring and logging. Honeypot systems are often readily accessible to malicious software via a network (e.g., discoverable on a local area network (LAN), etc.). Monitoring and control functionalities of honeypot systems are well disguised to avoid being detected by malware configured to recognize and avoid honeypots. With such characteristics, honeypot systems are often used to attract or isolate attacks within a network as well as to generate useful data that indicates how malicious software operates. For example, honeypot systems can provide data indicating potential threats posed by malware that can be shared with other devices to serve as an early warning system. In general, successful honeypot systems provide controlled opportunities to learn from malicious software without fear of actual damage to data, the network, and computing devices on the network.

US 2005/166 072 A1 relates to a method and a system for wireless morphing honeypot, wherein characteristics of the wireless honeypot system are changed on a dynamic and configurable basis.

US 2007/240 215 A1 relates to a method and a system for tracking access to application data and preventing data exploitation by malicious programs. In one example, the method includes shimming into a running process of the system to create at least one monitoring hook to monitor a program, building an execution path of the monitored program and monitoring a behavior of the execution path for malicious behavior using the monitoring hook.

### SUMMARY

The invention is defined in the independent claims. In the following, the parts of the description and drawings referring to embodiments which are not covered by the claims are not presented as embodiments of the invention but as background art or examples useful for understanding the invention. Various embodiments provide methods, devices, systems, and non-transitory process-readable storage media for a honeypot system to trigger malicious activities by applications. Various embodiment methods may be performed by a processor of a computing device implementing the honeypot system. A computing device implementing various embodiments may be a mobile computing device. Various embodiments may include predicting a triggering condition of one or more target applications in response to determining that the one or more target applications are potentially malicious. Various embodiments may further include provisioning one or more resources based, at least in part, on the predicted triggering condition, and monitoring activities of the one or more target applications corresponding to the provisioned one or more resources. Various embodiments may further include determining whether or not the one or more target applications are malicious based, at least in part, on the monitored activities. Some embodiments may further include determining whether an application currently executing on the computing device is potentially malicious, and designating the application as one of the one or more target applications in response to determining that the application is potentially malicious. In some embodiments, determining whether an application currently executing on the computing device is potentially malicious may include analyzing at least one of a permission of the one or more target applications corresponding to accessing resources of the computing device. In some embodiments, determining whether an application currently executing on the computing device is potentially malicious may include analyzing stored activity data indicating previous activities of the one or more target applications.

In some embodiments, the one or more resources may include one or both of one or more device components and data. In some embodiments, the one or more device components may include at least one member of the group consisting of an installed application, an operating system, a network interface, a processing unit, a data storage unit, a coupled device, an output unit, an input unit, and a sensor. In some embodiments, the data may include at least one member of the group consisting of a contact list, a stored file, personal information, networking conditions data, subscription information, location information, system information, known vulnerability information, and sensor data.

In some embodiments, predicting the triggering condition of the one or more target applications may include evaluating at least one of a permission of the one or more target applications, any resources previously accessible to the one or more target applications, and stored activity data indicating previous activities of the one or more target applications.

In some embodiments, provisioning the one or more resources based, at least in part, on the predicted triggering condition may include adjusting a resource previously visible to the one or more target applications based, at least in part, on the predicted triggering condition. In some embodiments, provisioning the one or more resources based, at least in part, on the predicted triggering condition may include configuring a resource that was previously invisible to the one or more target applications so that the resource becomes visible to the one or more target applications. In some embodiments, provisioning the one or more resources based, at least in part, on the predicted triggering condition may include creating a virtual resource based, at least in part, on the predicted triggering condition, in which the virtual resource represents an emulated device component or data that is not actually present within or supported by the computing device.

In some embodiments, monitoring activities of the one or more target applications corresponding to the provisioned one or more resources may include detecting an application programming interface (API) call made by the one or more target applications. In some embodiments, determining whether the one or more target applications are malicious based, at least in part, on the monitored activities may include evaluating the monitored activities and stored activity data indicating previous activities of the one or more target applications.

Some embodiments may further include updating stored activity data for the one or more target applications including information regarding resources that were provisioned when monitored activities of the one or more target applications lead to a determination that the one or more target applications are malicious. Some embodiments may further include transmitting a report message indicating the triggering condition for the one or more target applications in response to determining that the one or more target applications are malicious.

Further embodiments include a computing device configured with processor-executable instructions for performing operations of the methods described above. Further embodiments include a non-transitory processor-readable medium on which is stored processor-executable instructions configured to cause a computing device to perform operations of the methods described above. Further embodiments include a system including a computing device configured with processor-executable instructions to perform operations of the methods described above.

### BRIEF DESCRIPTION OF THE DRAWINGS

The accompanying drawings, which are incorporated herein and constitute part of this specification, illustrate various implementations, and together with the general description given above and the detailed description given below, serve to explain the features of the claims.
FIG. 1 is a system diagram including a mobile computing device configured to act as a honeypot system according to various implementations.
FIGS. 2-5 are diagrams illustrating dynamic data associated with resources of a mobile computing device configured to act as a honeypot system according to various implementations.
FIG. 6 is a process flow diagram illustrating a method for a computing device honeypot to perform operations for dynamically provisioning resources to attract or prompt malicious activity by an application according to various implementations.
FIG. 7 is a component block diagram of a mobile computing device suitable for use in an implementation.

### DETAILED DESCRIPTION

The various embodiments and implementations will be described in detail with reference to the accompanying drawings. Wherever possible, the same reference numbers will be used throughout the drawings to refer to the same or like parts. References made to particular examples and implementations are for illustrative purposes, and are not intended to limit the scope of the implementations or the claims.

Various embodiments and implementations include a dynamic honeypot system instantiated within a computing device that is configured to identify malicious behavior of applications executing on a processor by presenting various combinations of resources and functionality to the applications in a manner predicted to elicit malicious behavior. The computing device may be, but is not limited to a mobile computing device. For each potentially malicious application, the honeypot system may observe activities and states of the application and perform analyses using the observed data. The honeypot system may predict the situations, such as available device functionalities and operating states of the system, that are likely needed to cause each potentially malicious application to perform malicious actions. The honeypot system may provision resource(s) accordingly, such as by making accessible or visible various device components (e.g., sensors, network interface(s), memory locations, processors, radios, etc.) and/or data (e.g., contact lists, files, message contents, etc.). The honeypot system may continue to monitor the potentially malicious applications and iteratively adjust available resources until the potentially malicious applications exhibit malicious activities. By making accessible or visible device components that are common in mobile computing devices, such as smartphones, various embodiments and implementations may function as mobile honeypot systems for evaluating applications that might exploit common files and functions of mobile computing devices for malicious purposes.

The term "computing device" is used herein to refer to an electronic device equipped with at least a processor. Examples of computing devices may include mobile computing devices (e.g., cellular telephones, wearable devices, smart-phones, web-pads, tablet computers, Internet enabled cellular telephones, Wi-Fi enabled electronic devices, personal data assistants (PDA's), laptop computers, etc.), personal computers, and server computing devices. For example, a mobile computing device may include a heterogeneous or homogeneous multi-core smartphone. In various implementations, computing devices may be configured with memory and/or storage as well as networking capabilities, such as network transceiver(s) and antenna(s) configured to establish a wide area network (WAN) connection (e.g., a cellular network connection, etc.) and/or a local area network (LAN) connection (e.g., a wired/wireless connection to the Internet via a Wi-Fi router, etc.).

The terms "malicious behavior(s)," "malicious activity(ies)," and "malicious action(s)" are used interchangeably herein to refer to any one or more operations by an application (e.g., malware) executing on a computing device that may result in an attack, a compromise, a failure, a data loss, and/or other unwanted or unauthorized condition for the computing device and/or associated user(s). For example, malicious activity may include unauthorized or unwanted data accesses (e.g., reading, copying, etc.), data transmissions (e.g., sensitive data transferred to remote device, etc.), and/or data changes (e.g., renaming, writing, overwriting, deleting, corrupting, encrypting, decrypting, changing permissions, etc.). As another example, malicious activity may include unauthorized or unwanted device component changes, such as rebooting systems or subsystems, overloading processor(s), deactivating sensors, disconnecting storage devices, etc. Malicious activity may include multiple operations that cause an unwanted or unauthorized result only when performed in combination. For example, malicious activity may include a typically benign poll of coupled external storage devices in combination with a typically benign request to copy sensitive data.

There are various types of typical honeypot systems. "Active" honeypot systems may be configured to monitor for and respond to detected threats from malicious applications. "Passive" honeypot systems may be configured to simply collect monitoring data (e.g., detected application programming interface (API) calls, etc.) for analysis of exploits and malicious activities. Some honeypot systems are designed to only provide access to functionalities of a computing system that may be of interest to particular malicious applications. For example, a honeypot system may target activity by a known malware app by recreating known vulnerable subsystems without providing a fully-functional system. Such honeypot system techniques may limit interactions of malicious applications to subsystems known to be vulnerable to the particular malicious applications. Other honeypot system techniques may employ high interaction designs that recreate fully-functional systems, such as by mimicking normal characteristics and resources at the cost of high overhead.

Due to the resources required to provide suitable environments for evaluating malicious activity, honeypot systems are often implemented in servers or static computing systems that have defined operating conditions and/or device components. Some honeypot systems may also be implemented in mobile computing systems, but often with a smaller scope due to limited processing capabilities, memory, and power of mobile systems. For example, extensive or constant monitoring operations may be more difficult to accomplish for long periods of time on a mobile devices due to the limited battery life and processing horsepower.

Some sophisticated malicious applications can selectively decide when to attack a computing system as well as determine various resources to use in attacks. For example, a malware app may not reveal malicious activity (e.g., transmitting secured data from a mobile phone, etc.) until long after the malware app was downloaded and installed on a system. As another example, the malware app may execute innocuous operations for the vast majority of execution time, only engaging in malicious activities (e.g., deleting files, etc.) when certain operating conditions of the host computing system are met. Not knowing when malicious activities may occur or what resources may be used for the malicious activities, typical honeypot systems are forced to employ costly, constant monitoring of application activities.

The sophisticated nature of some malicious applications is additionally problematic for honeypot systems implemented on mobile computing devices because mobile devices often include a wide range of device components, functionalities, and system states that may be used for malicious activities. For example, malware apps on a mobile phone may utilize or otherwise rely upon any combination of multiple communication interfaces, a wide range of device configurations and operation scenarios (e.g., available radio access technologies, channel conditions), different user behaviors (e.g., providing inputs, etc.), and simultaneously-executing applications. Malicious applications can be designed to utilize certain resources such that malicious activity is only triggered when a highly specific and complex set of operating conditions of a computing device are satisfied at a given time. For example, malware may use current location of a smartphone in combination with one or more other factors to determine whether to initiate malicious activities. So many options for malicious activities in mobile systems complicate the design of honeypots that can attract and trigger such malicious activities, leaving these popular mobile computing environments especially vulnerable.

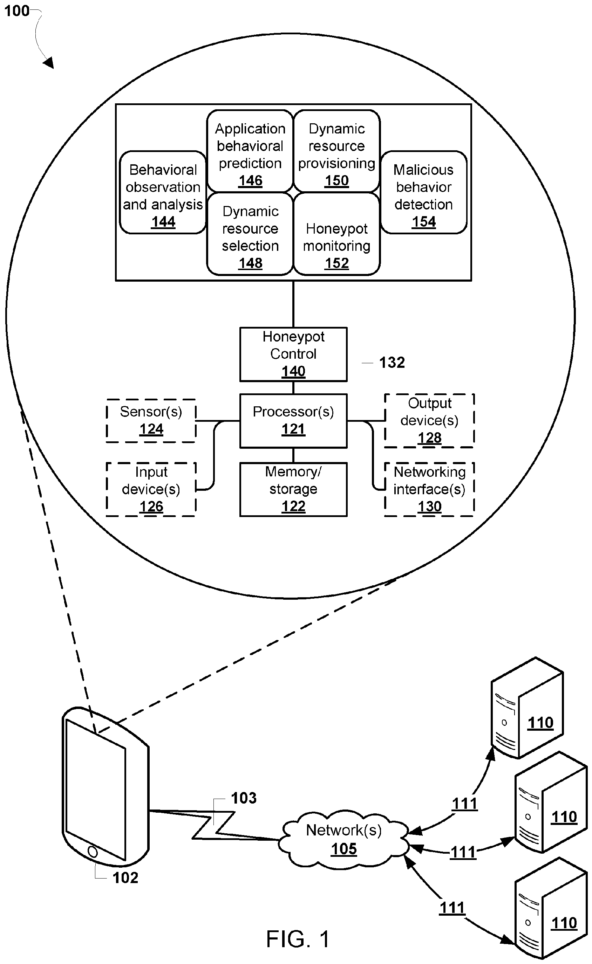

Various embodiments provide methods, devices, and non-transitory process-readable storage media for using causal analysis and/or behavioral prediction to trigger malicious activities by malicious applications. In general, a computing device (e.g., the mobile computing device 102 illustrated in FIG. 1) may be configured to operate as a honeypot system. In an example implementation, the honeypot system may be a smartphone that is configured to be visible (e.g., discoverable) on a network and that has some controlled functionalities available to external entities/users, etc. The honeypot system may analyze various characteristics, prior activities, and permissions of various applications that are executing via a processor (e.g., processor 121 in FIG. 1) of the computing device. The honeypot system may also monitor all requests, messages, polling, copies/writes, accesses, and other activities of the applications. Based, at least in part, on such analysis and monitoring, the honeypot system may predict conditions (e.g., presence of certain device components, system states and/or other operating conditions of the computing device) that may trigger malicious activities of the applications. The honeypot system may then provision new resources and continue monitoring to determine whether or not the applications begin acting maliciously. The honeypot system may iteratively continue with such operations to find combinations of resources that successfully expose malicious applications. With such predictions based, at least in part, on behavioral analysis, previously unknown threats and vulnerabilities may be identified with reduced system monitoring and detection overhead.

In some implementations, the honeypot system may use machine learning algorithms and historical activity data of applications to identify applications that are potentially malicious. In some implementations, an application may be identified as potentially malicious based, at least in part, on a calculation of the probability that the application is capable of or positioned to launch malicious activities. For example, the honeypot system may calculate a probability value based, at least in part, on an analysis of the current permissions of the application and previously observed actions by the application (e.g., data accesses, connection requests, etc.). Such calculated probability values may be compared to threshold values, such as predefined thresholds or dynamic thresholds updated over time based, at least in part, on observed actions matching suspicious or potentially malicious activity.

Using analyses of a potentially malicious application's activities, the honeypot system may predict the conditions (i.e., triggering conditions) that the potentially malicious application requires to be present in the mobile computing device before it will exhibit malicious activities. For example, the honeypot system may estimate the networking conditions (e.g., signal strength, bandwidth, and connection type) that the potentially malicious application may be waiting for. Such estimated networking conditions may be based, at least in part, on the potentially malicious application's recorded actions during previous operating conditions of the computing device, such as when different network interface(s) were available or not available. Predicted triggering conditions may enable the honeypot system to identify the exact resources (e.g., activated device components, available network interface, etc.) that should be available to prompt the potentially malicious application to act. Further, predicted triggering conditions may also enable the honeypot system to identify indirect conditions (e.g., system states, location, configuration parameters, etc.) that may be required to properly trick the potentially malicious application into acting.

The honeypot system may provision the identified resources, such as by activating device components and/or adjusting values of stored data. In general, provisioning may include deactivating, activating, adjusting, configuring, hiding, showing, creating, deleting, and/or otherwise making available (or unavailable) various functionalities of the mobile computing device. Provisioned resources may be real resources isolated from other elements of the honeypot system (e.g., sandboxed) or emulated by the honeypot system. Provisioned resources may be made visible system-wide, to a group of applications, or only to the potentially malicious application.

In some implementations, the provisioned resources or other related resources may be configured to hide the nature of the honeypot system from the potentially malicious application. For example, fake Wi-Fi access points may be identified as coming and going when the honeypot system is moving (or simulating movement). As another example, the honeypot system may create fake contact lists with diverse area codes to appear similar to real contact lists on an actual user's smartphone.

In various implementations, the resources that may be provisioned may or may not be determined by the specifications of the computing device providing the honeypot system. For example, in some implementations, the honeypot system may be configured to adjust and/or emulate functionalities (e.g., global positioning system (GPS) receiver, accelerometer sensors, 4G connectivity, etc.) that are not actually present or available to the computing device.

The honeypot system may closely monitor and analyze the potentially malicious application's activity corresponding to any provisioned resources. For example, the honeypot system may intercept outgoing messages and/or application programming interface (API) calls from the potentially malicious application.

If the potentially malicious application does not respond to the provisioned resources with malicious activity, the honeypot system may iteratively continue to predict triggering conditions and provision new (or adjusted) resources based, at least in part, on subsequent monitoring/predictions. For example, new observations of the potentially malicious application's activities may be forwarded to an analyzer to identify likely resources that the potentially malicious application is waiting to use. As another example, in response to intercepting outgoing messages and/or application programming interface (API) calls from the potentially malicious application, the honeypot system may respond with false information (e.g., available networking connections, contact list data, transmission confirmations, etc.). Such an iterative process may continually tailor the honeypot system's resources to the potentially malicious application until malicious activities are detected or fully analyzed.

As described above, the honeypot systems of the various embodiments are particularly useful in evaluating mobile applications that may exploit files, components, and functions of mobile computing devices, such as smartphones. For this reason, various embodiments and implementations are described with reference to mobile computing devices as an example of computing devices suitable for implementing embodiment honeypot systems. However, references to mobile computing devices are intended to be exemplary, and not intended to limit the scope of the claims.

The following is a non-limiting illustration of the honeypot system executing on a mobile computing device (e.g., smartphone) according to various implementations. A particular application may be designed to only perform malicious activities (e.g., leaking passwords, etc.) when the honeypot system is located in the Ukraine. In other words, prior to being locating in the Ukraine, the application will not exhibit any malicious activity. The honeypot system may observe that the application has permission to access stored data, wide area network (WAN) connection(s), and location services. The resources may be any combination of actual resources or virtual resources created by the honeypot system. The honeypot system may provide fake GPS coordinates that indicate the mobile computing device is in San Francisco, CA. Over a period, the honeypot system may observe that the application periodically reads or has access to location data (e.g., GPS data), but only exhibits limited or benign network activities.

Based, at least in part, on the permissions, the honeypot system may conclude that the application has a high probability of leaking information. The honeypot system may predict that the application may require a particular location to trigger malicious activity. In response, the honeypot system may generate various fake location data to indicate locations in different places around the world. When generating location data indicating a current position within the Ukraine, the application may be triggered and may begin to perform operations to leak sensitive information, thus confirming that the application is malicious. The honeypot system may block such leaking if necessary and may record the conditions/ resources available as accurate triggering conditions for the particular application.

In some implementations, the honeypot system may maintain the history and state of all applications for a time period to detect malicious activities that have delayed or specific triggers. In some implementations, potentially malicious applications may be determined to not be malicious based, at least in part, on subsequent activities.

In various implementations, resources that may be provisioned by the honeypot system may include various device components (and/or associated settings) and data (and/or associated settings). For example, resources may include any combination of one or more of an installed application (e.g., virus protection software, firewall software, etc.), an operating system (e.g., Android, Windows, etc.), a network interface (e.g., hardware and/or software for establishing communications over various networks local area networks and/or wide area networks, such as transceivers, antenna, controllers, etc.), a radio access technology (RAT) (e.g., Long-Term Evolution (LTE), 3G, 2G, Wi-Fi, Bluetooth®, etc.), a processing unit (e.g., digital signal processor (DSP), central processing unit (CPU), graphics processing unit (GPU), etc.), a data storage unit (e.g., memory, cache, hard drive, etc.), a coupled device (e.g., external hard drive connected via universal serial bus (USB) connection, USB thumb drive, secure digital (SD) card, etc.), an output unit (e.g., display, speaker, etc.), an input unit (e.g., keyboard, touch screen, etc.), and/or a sensor (e.g., camera, microphone, accelerometer, gyroscope, etc.). As another example, resources may be data that includes any combination of one or more of a contact list, a stored file, secure or personal information (e.g., pictures, videos, saved passwords, messages contents, emails, etc.), networking conditions data (e.g., access point name (APN), Internet protocol (IP) address, round-trip time (RTT), available throughput, open-available ports, backhaul information, mobility, signal strength, upload/download rates, bandwidth, etc.), subscription information (e.g., Subscriber Identity/Identification Module (SIM) card(s) available, Public Land Mobile Network (PLMN), Mobile Network Operator (MNO), tracking area, etc.), location information (e.g., global positioning system (GPS) availability, location coordinates, etc.), system information (e.g., available memory, central processing unit (CPU) information, CPU usage, running services, screen/ display activated, touch capabilities available, etc.), known vulnerability information (e.g., operating system (OS) information such as OS version, OS installed patches; security information such as secure sockets layer (SSL) version, SSL implementation; weak or outdated security algorithms, such as Export level AES; etc.), and sensor data (e.g., sensor(s) availability, sensor data, etc.).

In some implementations, the honeypot system may utilize various modules, components, instructions, operations, circuitry, and/or routines to perform causal and/or behavioral analysis operations, monitoring, and/or other operations to detect, control, and/or predict activities within the mobile computing device. In some implementations, the honeypot system may be enabled via a honeypot system control module (e.g., honeypot system control module 140 in FIG. 1). For example, such a honeypot system control module may be an OS service, software, circuitry, a module, a routine, etc. that is configured with access to system-level resources and/or signaling within the mobile computing device. In some implementations, the honeypot system may identify potentially malicious applications using a real-time analysis platform, such as the Qualcomm Snapdragon Smart Protect from Qualcomm Incorporated.

The various embodiments provide a dynamic honeypot system that uses behavioral analysis and prediction to trigger or entice hidden malicious activities of applications in controlled mobile environments. In particular, the various implementations disclosed iteratively predict triggering conditions required by potentially malicious applications, and continually adjust the available resources until malicious activities are observed. These novel techniques are suitable for detecting vulnerabilities of unknown malware or other threats, as various implementations do not require predefined triggering conditions but instead analyze application behaviors and characteristics to dynamically identify resources to use in testing. Such techniques may also reduce monitoring and detection costs.

The various embodiments differ from existing techniques that monitor applications to identify malware. For example, some existing techniques simply provide device inputs (e.g., dummy keystrokes) that may be expected by known malware but do not dynamically change mobile computing device operating conditions or environments. Such existing techniques are not predictive and do not iteratively provision different resources based, at least in part, on observed, non-malicious activities of applications. Various implementations may use state information and system resource information of a mobile computing device to cause malicious activities of unidentified or unknown malicious software, and thus do not rely upon using obvious input mechanisms that cause known malware to activate.

Unlike other existing techniques, various implementations do not merely employ static configurations of software or computing systems. For example, the various implementations disclosed herein do not iteratively implement a set of predefined software installs (or system images) for different operating systems or architectures. Instead, various implementations dynamically change individual resources (e.g., available hardware device components, system state variable values, etc.) based, at least in part, on behavioral analysis of potentially malicious applications (e.g., current permissions, historical activity). Such dynamic changes are not based on known exploits or specific scenarios known to cause malware activity. For example, based on current behaviors of an unknown app, a mobile device configured with various implementations may evaluate the behaviors and iteratively change any number of available device components, device component configurations or operating states (e.g., connectivity), and/or system conditions (e.g., battery power level, etc.).

Some existing techniques monitor the movement of particular content within a computer system (e.g., data in outgoing transmissions). Various implementations do not just watermark or merely monitor whether particular data or files have moved. Instead, various implementations evaluate various activities of potentially malicious applications to predict the triggering conditions needed to force malicious activities. In other words, various implementations do not simply track certain data that has been leaked out, provide watermarks, or identify access routes to sensitive data.

FIG. 1 illustrates a communication system 100 including a mobile computing device 102 configured to act as a honeypot system according to various implementations. The mobile computing device 102 may exchange communications over one or more networks 105 via wired or wireless connections 103 (e.g., Wi-Fi network connections, cellular network connections, etc.). For example, the mobile computing device 102 may exchange data with one or more remote server(s) 110 that are also connected to the one or more network(s) 105 via wired or wireless connection(s) 111. In various implementations, the network(s) 105 may include local area networks (LANs) and/or wide area networks (WANs), and may be associated with various access points, such as Wi-Fi router(s), cellular network base stations, etc.

In various implementations, the mobile computing device 102 may be any of various types of mobile computing devices, such as tablets, smartphones, and laptop computers. In some implementations, the one or more remote server(s) 110 may include various third-party servers (e.g., web servers accessible via the Internet, app store servers, etc.) and/or server computing devices associated with honeypot system monitoring (e.g., a security server that manages data regarding malware applications, etc.).

In various implementations, the mobile computing device 102 may include one or more processors 121. For example, the mobile computing device 102 may include one or more central processing units (CPU) (or application processors), a digital signal processor (DSP), a graphics processing unit (GPU), or any combination thereof. The mobile computing device 102 may also include various memory/ data storage unit(s) 122 (e.g., RAM, cache, hard drives, flash drives, etc.) capable of storing processor-executable instructions (e.g., applications, programs, routines, operating system, etc.), data (e.g., application data, messages, profiles, pictures, audio files, etc.), and/or other information for performing various operations as described herein. Various components of the mobile computing device 102 (e.g., 121-130) may be coupled together via wired and/or wireless connections, such as via a bus 132.

The mobile computing device 102 may also include optional components that may or may not be necessary for implementing a honeypot system according to various implementations. For example, the mobile computing device 102 may include one or more networking interface(s) 130 for exchanging communications with other devices and/or network(s). For simplicity purposes, the networking interface(s) may refer to and otherwise include any hardware (e.g., transceivers, antenna, connectors, etc.) and/or software (e.g., logic, firmware, etc.) for exchanging wireless signals according to various radio access technologies, protocols, and/or formats. For example, the networking interface(s) may include Wi-Fi, Bluetooth®, RF, and/or near field communication (NFC) radio(s). The mobile computing device 102 may include one or more sensor(s) 124 (e.g., camera, microphone, light sensor, accelerometer(s), gyroscope(s), etc.). The mobile computing device 102 may also include various input device(s) 126, such as touch screen input, peripherals (e.g., mouse, keyboard, etc.). The mobile computing device 102 may also include various output device(s) 128, such as a touch screen display, light bulb(s), speakers, etc. In some implementations, the mobile computing device 102 may also include a global positioning system (GPS) receiver.

The various optional components may be considered optional as in some implementations the mobile computing device 102 may be configured to simply emulate such components or related functionalities without requiring the actual components to be present within the mobile computing device 102. For example, the mobile computing device 102 may not include an actual Bluetooth® radio, but may be configured to emulate the presence of a Bluetooth® radio for the purpose of making a Bluetooth resource available to an application to trigger malicious activities by applications executing on the processor(s) 121.

In various implementations, the mobile computing device 102 may be configured with various software, service, components, modules, circuitry, and/or other functionalities that enable at least the monitoring, analysis, and prediction of malicious application activity on the mobile computing device 102 (i.e., the honeypot system). In essence, the honeypot system may be invisible to potentially malicious applications, but capable of controlling every interaction of the potentially malicious applications with that various system components, data, and abilities of the mobile computing device 102. In some implementations, the processor 121 of the mobile computing device 102 may enable a honeypot system by executing a honeypot system control module 140. The honeypot system control module 140 may be configured to continually generate, intercept, and filter signals within the system to control the information and resources available for use by potentially malicious applications. For example, the honeypot system control module 140 may intercept or otherwise detect API calls as well as any device-level or OS-level messaging, such as requests from installed applications to poll sensors or receive stored data from memory or other data storage unit.

In some implementations, the honeypot system control module 140 may include and/or utilize various modules (e.g., logic, software, circuitry, etc.) to provide the honeypot system. For example, the honeypot system control module 140 may utilize a behavioral observation and analysis module 144 that is configured to evaluate system information (e.g., state variables, accesses, etc.) and perform machine learning to identify the presence of potential malicious applications. For example, the behavioral observation and analysis module 144 may be configured to evaluate application permissions, previously-executed API calls, and/or resource accesses (e.g., memory access, network connectivity query, etc.) by a certain application to calculate a probability that the application is malware or not. Based, at least in part, on such analysis, the behavioral observation and analysis module 144 may identify the application as potentially malicious or not.

The honeypot system control module 140 may also utilize an application behavioral prediction module 146 that is configured to predict triggering conditions that may cause the target application to exhibit malicious activities. For example, the application behavioral prediction module 146 may perform a secondary analysis of a target application, related characteristics, and previously observed activities to identify one or more resources or operating conditions of the mobile computing device 102 that have not been previously available but that may cause malware to activate if made available.

The honeypot system control module 140 may utilize a dynamic resource selection module 148 that is configured to select various resources and/or system states that may be made available and/or adjusted to trigger malicious activities of potentially malicious applications. The selection of these resources and/or system states may be done in a manner designed to increase the likelihood of satisfying identified triggering conditions.

The honeypot system control module 140 may also utilize a dynamic resource provisioning module 150 that is configured to provide selected resources to potentially malicious applications. For example, the dynamic resource provisioning module 150 may create and/or adjust virtual (or emulated) resources (e.g., virtual network connections or interfaces, such as Wi-Fi network connection, registration to a specific MNO, etc.). As another example, the dynamic resource provisioning module 150 may configure actual resources to be visible but have only limited access to applications (e.g., making visible a camera sensor that cannot take pictures, etc.). The dynamic resource provisioning module 150 may make resources visible system-wide, to a group of applications, or only to a particular application.

The honeypot system control module 140 may also utilize a honeypot system monitoring module 152 that is configured to monitor and observe various resources (e.g., system state information, device states, etc.) as well as any operations and/or states of potentially malicious applications. For example, the honeypot system monitoring module 152 may be configured to intercept and evaluate any API calls, OS requests, interrupts, signals, and/or other communications from a particular target application.

The honeypot system control module 140 may also utilize a malicious activity detection module 154 that is configured to combine new observations with previously observed information corresponding to potentially malicious applications to detect malicious activities. For example, the malicious activity detection module 154 may detect trends of actions by a target application over several iterations of behavioral analysis and determine that the combination of actions likely represent malicious activity.

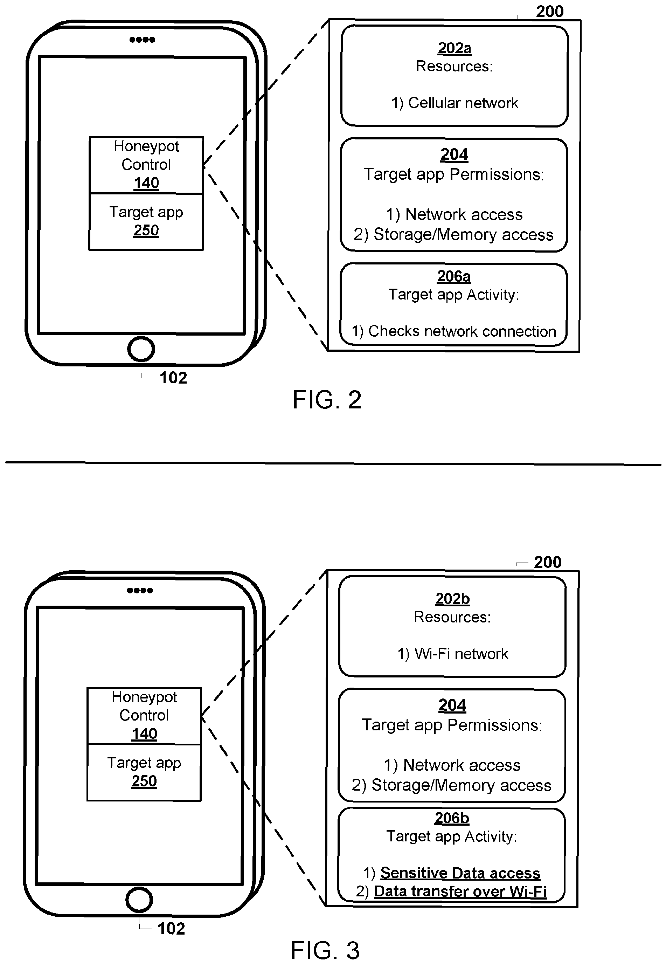

FIGS. 2-5 are diagrams illustrating an example of dynamic data 200 that may be used by a mobile computing device 102 configured to act as a honeypot system according to various implementations. The dynamic data 200 may correspond to information stored by the mobile computing device 102 during the execution of an iterative behavioral analysis algorithm to determine triggering conditions for potentially malicious applications according to various implementations described herein. In some implementations, the dynamic data 200 and the iterative behavioral analysis algorithm may be updated, managed, performed, and otherwise controlled by a honeypot system control module 140 as described.

For the purpose of a non-limiting illustration, FIGS. 2-5 address a scenario in which the mobile computing device 102 has identified a target application 250 (or target "app") as a potentially malicious application. This identification may have been based, at least in part, on an analysis of permissions and/or previous activities of the target application 250 via a behavioral observation and analysis module 144 as described. The dynamic data 200 may correspond to information stored by the mobile computing device 102 during the execution of the iterative behavioral analysis algorithm with regard to the target application 250. The dynamic data 200 may include: resources data segments 202a-202d indicating the current resources (e.g., device components, data of system state) that are provisioned or otherwise "visible" for use by the target application 250 at a given time; a permissions data segment 204 indicating the permissions of the target application 250; and activity data segments 206a-206d indicating current target application 250 activity (e.g., API calls made in response to adjustments to resources and/or state information, etc.). For the purposes of example illustrated in FIGS 2-5, the permissions data segment 204 may indicate that the target application 250 has permissions to access various networking functionalities (e.g., cellular network connections, Wi-Fi network connections, etc.), as well as memory and/or storage device access (e.g., read/write data to memory, disk, external storage, etc.).

In various implementations, the mobile computing device 102 may use various data structures and recording schemes for storing, defining, presenting (or making accessible), and tracking data associated with the target application 250 and/or the behavioral analysis algorithm. Any data or data structures illustrated in FIGS. 2-5 are intended to be merely illustrative and non-limiting to other manners of data management.

FIG. 2 illustrates the dynamic data 200 stored by the mobile computing device 102 after a first iteration of the behavioral analysis algorithm. In particular, the dynamic data 200 may include a resources data segment 202a that includes data indicating a cellular network interface is present in the mobile computing device 102. The dynamic data 200 may also include an activity data segment 206a that indicates that the target application 250 has not performed any actions or alternatively has not performed any potentially malicious actions with the available cellular network connection. In particular, the target application 250 may have merely performed checks of the current network connection, which may be a common operation for many benign applications executing on mobile computing devices.

As no malicious activity is detected after the first iteration of the behavioral analysis algorithm, the mobile computing device 102 may use any combination of the data in the dynamic data 200 to perform a second iteration of the behavioral analysis algorithm for predicting triggering conditions for the target application 250. In particular, the mobile computing device 102 may evaluate the permissions of the target application 250 (e.g., network and storage/memory access) in combination with the current resources made available to the target application 250 (e.g., cellular network) to predict conditions and/or resources that the target application 250 may be awaiting before performing malicious actions. Such predictions may be made using an application behavioral prediction module 146 as described.

For example, via the behavioral analysis algorithm, the mobile computing device 102 may observe that the target application 250 has network access permission, has access to sensitive data, and only performs benign activities with the cellular network connection (e.g., checks the available network connections (e.g., RAT availability, domain name system (DNS) query to specific non-common addresses, etc.). In response to this observation, the mobile computing device 102 may conclude that the target application 250 has a high probability of leaking sensitive information using a WAN connection. The mobile computing device 102 may also predict that the target application 250 looking for a different type of network connectivity or RAT (e.g., Wi-Fi) for leaking sensitive information.

Based, at least in part, on these predictions, the mobile computing device 102 may provision a virtual Wi-Fi network connection or interface that may be visible only to the target application 250, such as via a dynamic resource selection module 148 and dynamic resource provisioning module 150 as described. The virtual Wi-Fi network connection may be tightly monitored and have limited network connectivity. The mobile computing device 102 may be capable of detecting any communications sent (or requested to be sent) via the new Wi-Fi network connection, such as via a honeypot system monitoring module 152 as described.

FIG. 3 illustrates dynamic data 200 stored by the mobile computing device 102 after the second iteration of the behavioral analysis algorithm and the provisioning of the virtual Wi-Fi network connection of this example. The resources data segment 202b indicates that the mobile computing device 102 provisioned the Wi-Fi network connection to replace the cellular network connection as shown in FIG. 2. In response to changing the type of networking connection available to the target application 250, the dynamic data 200 may now include an activity data segment 206b that indicates the target application 250 performed operations to access sensitive data (e.g., password files, contact lists, etc.) and then to conduct an external data transfer via the virtual Wi-Fi network connection. The mobile computing device 102 may determine that such actions of the target application 250 are potentially malicious, such as via a malicious activity detection module 154 as described. Using the iterative behavioral analysis algorithm, the mobile computing device 102 may have determined at least that the target application 250 is likely designed to use only Wi-Fi network connections (e.g., not using a cellular network) for carrying out the malicious activity of stealing/ distributing sensitive data.

In some cases, the mobile computing device 102 may perform additional iterations of the behavioral analysis algorithm to trigger malicious activity of the target application 250. For example, if the target application 250 is configured to perform malicious activities only when several conditions are met, the mobile computing device 102 may repeatedly perform analysis, prediction, and provisioning operations until the exact combination of factors are presented to cause malicious activity.

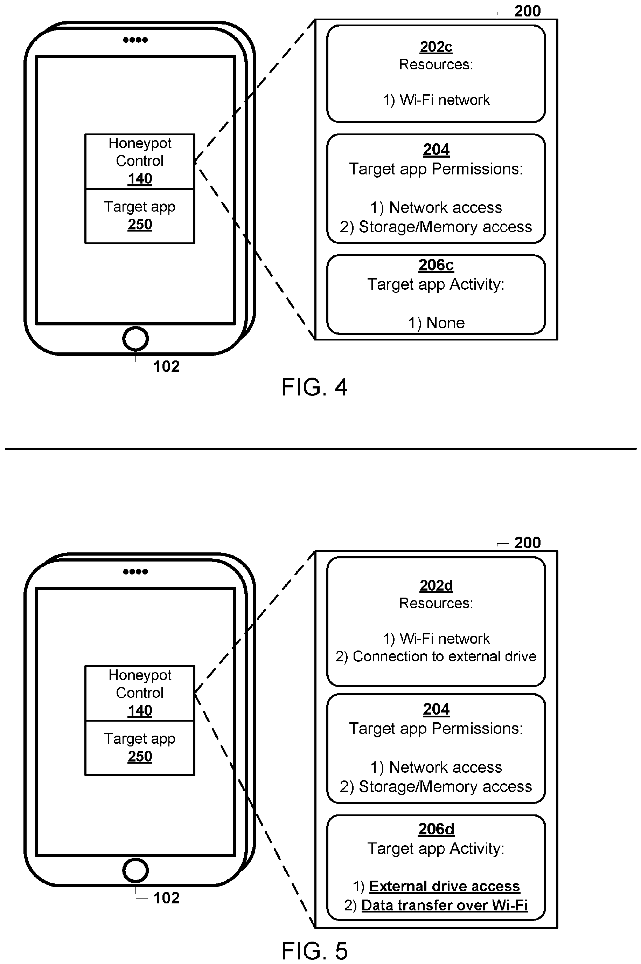

FIG. 4 illustrates an example scenario wherein the target application 250 does not begin performing malicious actions in response to the change from a cellular network connection to a Wi-Fi network connection. Specifically, FIG. 4 illustrates dynamic data 200 stored after the second iteration of the behavioral analysis algorithm and the provisioning of the virtual Wi-Fi network connection as indicated by the resources data segment 202c. In this example, the activity data segment 206c does not indicate that the target application 250 performed potentially malicious actions in response to the newly provisioned Wi-Fi network connection.

As no malicious activity is detected after the second iteration of the behavioral analysis algorithm, the mobile computing device 102 may use any combination of the data in the dynamic data 200 to perform a third iteration of the behavioral analysis algorithm for predicting triggering conditions for the target application 250. The mobile computing device 102 may evaluate the permissions of the target application 250 (e.g., network and storage/memory access) in combination with the current resources made available to the target application 250 (e.g., Wi-Fi network connection). The mobile computing device 102 may then predict conditions and/or resources that the target application 250 may be awaiting before performing malicious actions.

For example, via the behavioral analysis algorithm, the mobile computing device 102 may observe that the target application 250 had different types of network access plus access to certain sensitive data, but only performed benign activities. In response, the mobile computing device 102 may conclude that the target application 250 may have a high probability of stealing information that mobile computing device 102 may access sensitive data but does not store any data locally. In this circumstance, the mobile computing device 102 may predict that the target application 250 may be waiting for a new data source that contains a particular type of data that the target application 250 is designed to steal. Based, at least in part, on that prediction, the mobile computing device 102 may create a virtual connection to a fake external data source (or drive), such as a hard drive connected via a wireless or wired connection (e.g., Bluetooth®, NFC , cable, etc.) or a thumb drive connected via universal serial bus (USB) connection, etc. The mobile computing device 102 may be capable of detecting any data accesses (e.g., copy, write, read, etc.) to the new fake external data source.

FIG. 5 illustrates the dynamic data 200 stored by the mobile computing device 102 after the third iteration of the behavioral analysis algorithm and the provisioning of the connection to the fake external data source. The resources data segment 202d indicates that the mobile computing device 102 provisioned the connection to the external data source (or drive) in addition to the previously provisioned Wi-Fi network connection. In response to the change in provisioned resources, the dynamic data 200 now includes an activity data segment 206d that indicates the target application 250 began operations to access the external drive (e.g., copy data, etc.) and then to conduct an external data transfer over the Wi-Fi network connection; activities that may be malicious. In other words, using the iterative behavioral analysis algorithm, the mobile computing device 102 in this example determined that the target application 250 is designed to use at least Wi-Fi network connections for carrying out the malicious activity of stealing and distributing data from data sources external to the mobile computing device 102.

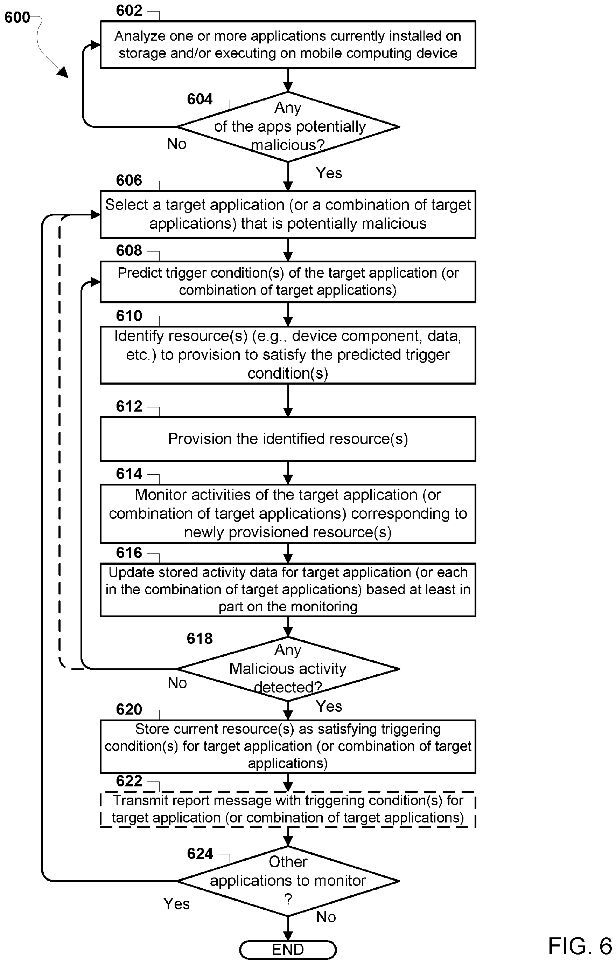

FIG. 6 illustrates a method 600 for a mobile computing device using behavioral analysis and dynamic resource provisioning to trigger malicious activities by applications according to various implementations. In some implementations, various operations of the method 600 may be performed by a honeypot system control module 140 and various modules (e.g., modules 144-154), each executing via a processor of the mobile computing device (e.g., processor 121 of the mobile computing device 102).

In block 602, the processor of the mobile computing device may analyze one or more applications installed on the storage and/or executing on the processor(s) of the mobile computing device to assess the probability that the applications could be malicious. For example, the mobile computing device may evaluate permissions for each application running on the processor to identify potential subsystems and/or other functionalities of the mobile computing device that may be accessed by the application. The mobile computing device may calculate a probability that each of the one or more applications is potentially malicious based, at least in part, on previously observed and stored data of each application (e.g., historical activities of the applications, current permissions, etc.). In some implementations, certain permissions, previous actions, or any combinations thereof may indicate an application has a higher probability of being malware. For example, the mobile computing device may calculate a high probability that an application is capable of performing malicious data-leaking operations due to a capability of the application to access particular components (e.g., network interfaces) and/or sensitive data of the mobile computing device. As another example, the mobile computing device may calculate a high probability that an application is capable of performing malicious data-leaking operations based on matching known behavior(s) of malicious applications to current (or recent) behavior(s) of the application observed during execution on the mobile computing device.

In determination block 604, the processor of the mobile computing device may determine whether or not any of the one or more applications currently installed on the storage and/or executing on the processor(s) of the mobile computing device are potentially malicious. For example, the mobile computing device may compare a calculated probability that the application is malicious to a threshold value to determine whether an application should be categorized as potentially malicious. In some implementations, the operations of blocks 602-604 may be performed using a behavioral observation and analysis module 144 as described with reference to FIG. 1.

In response to determining that none of the one or more applications currently executing on the processor(s) of the mobile computing device are potentially malicious (i.e., determination block 604 = "No"), the mobile computing device may continue with the analysis operations in block 602 or end if all applications have been analyzed and found to be most likely benign.

In response to determining that one or more of the applications currently executing on the processor(s) of the mobile computing device are potentially malicious (i.e., determination block 604 = "Yes"), the processor of the mobile computing device may select a target application that is potentially malicious in block 606. For example, the selected target application may simply be the next in a plurality of identified potentially malicious applications. In some implementations, the mobile computing device may select a plurality (or combination) of target applications to evaluate with the operations of blocks 606-622. In other words, the selection of block 606 by the mobile computing device may not be limited to only one target application, but instead the honeypot system may run for a group of applications that may have similar (or the same) triggering parameters.

In block 608, the processor of the mobile computing device may predict trigger condition(s) (e.g., available resources, system states, etc.) that may prompt or trigger malicious activity by the target application (or the combination of target applications). For example, the mobile computing device may predict that the target application requires a Wi-Fi network connection to start malicious actions, even if a Wi-Fi network connection is not actually available. In some implementations, the mobile computing device may make such predictions of triggering condition(s) by evaluating permissions of the target application (or combination of target applications), any resources previously accessible to the target application(s), and stored activity data indicating previous activities of the target application(s) to identify the situation that the target application(s) may be awaiting before starting behaving maliciously. In some implementations, the operations of block 608 may be performed using an application behavioral prediction module 146 as described with reference to FIG. 1. For example, the mobile computing device may make predictions about the actions or resources likely to be accessed by the target application (e.g., Bluetooth communication) in the future based on related actions observed up to a current time in the target application execution, such as querying for the presence or status of the Bluetooth component of the mobile computing device.

In block 610, the processor of the mobile computing device may identify resource(s) (e.g., device components, system state data) to provision that may satisfy the predicted triggering condition(s). For example, based at least in part on a predicted triggering condition that indicates the target application(s) requires a Wi-Fi network connection to start malicious actions, the mobile computing device may identify that a fake Wi-Fi network interface should be emulated or otherwise made visible to the target application(s). In some cases, the mobile computing device may identify that already available resources should be adjusted or re-configured to satisfy the predicted triggering condition(s). For example, a signal strength reading may need to be artificially increased or decreased. In some implementations, the mobile computing device may force the available resources into exceptional conditions to present the target application (or combination of target applications) with corner cases that might trigger additional malicious behaviors.

As described, resources that may be identified for provisioning may include one or more of a device component and data (e.g., system variables, OS-level data, register data, etc.). For example, device components may include an installed application, an operating system, a network interface, a processing unit, a data storage unit, a coupled device, an output unit, an input unit, and a sensor. As another example, resource data may include a contact list, a stored file, personal information, networking conditions data, subscription information, location information, system information, known vulnerability information, and sensor data.

To trigger particularly sophisticated malicious applications, dynamically providing resources and/or adjustments to resources should appear to the target application (or combination of target applications) as realistic as possible. For example, the target application(s) should not be able to distinguish fake or emulated networking conditions from real networking conditions actually present in the mobile computing device's network. As another example, a realistic phone contact list may include phone numbers having more than one area code. As another example, messages logs may indicate that the mobile computing device has exchanged multiple short message service (SMS) message with some but not all contacts in a contact list. Further, dynamic resources should appear, change, and disappear with a level of randomness that is consistent with real resources. For example, as a Wi-Fi network connection cannot be maintained outside of a typical Wi-Fi transmission range, a single Wi-Fi access point should not be reported as active when the other data indicates that the mobile computing device is a distance beyond the reach of a typical Wi-Fi access point.

Accordingly, in block 610 the mobile computing device may identify resources that are directly and/or indirectly related to the predicted trigger condition(s) for the target application (or combination of target applications). For example, to avoid a malware app detecting the presence of a honeypot system environment, the mobile computing device may present or simulate both movement information (e.g., sensor or changing GPS data) and provisioning of a different connected access point (e.g., SSID, media access control (MAC) address, RSSI). As another example, to provide a more realistic fake contact list that may be accessed by the target application(s), the mobile computing device may determine that more diverse contacts need to be added to the fake contact list (e.g., phone numbers from different area codes, different recipients/ senders of various numbers of SMS messages, etc.). In some implementations, the operations of block 610 may be performed using a dynamic resource selection module 148 as described with reference to FIG. 1.

In block 612, the processor of the mobile computing device may provision the identified resource(s). In some cases, provisioning may include adjusting already available (or visible) resources based, at least in part, on the predicted triggering condition(s), such as by changing operating characteristics of a device component (e.g., throughput, processing speeds, temperature readings, etc.) and/or adjusting the values of system data that may be polled by the target application(s). For example, the mobile computing device may adjust network connectivity status data that the target application(s) may request to indicate a particular signal strength, access point name, access network, etc. As another example, the mobile computing device may change GPS data to indicate the mobile computing device has re-located to a new city. Provisioning may also include configuring resources to be visible to the target application (or combination of target applications), even when such resources do not normally exist on the mobile computing device. For example, the mobile computing device may activate particular network interfaces and/or sensors for potential use by the target application(s). As another example, the mobile computing device may adjust a resource (e.g., adjust an operating parameter or configuration) that was previously visible to target application(s) based, at least in part, on a predicted triggering condition. As another example, the mobile computing device may configure a resource that was previously invisible to target application(s) so that the resource becomes visible or otherwise accessible to the target application(s).

In some implementations, provisioning may include creating virtual resource(s) based, at least in part, on the predicted triggering condition(s). Such virtual resources may represent emulated device components and/or data that are not actually present within or supported by the mobile computing device. For example, the mobile computing device may generate a virtual (or fake) Wi-Fi network interface, a fake Bluetooth® radio, a fake SIM card, coupled external device (e.g., USB thumb drive, etc.), and/or a fake DSP that are visible and accessible to the target application(s). In some implementations, the operations of block 612 may be performed using a dynamic resource provisioning module 150 as described with reference to FIG. 1.

In block 614, the processor of the mobile computing device may monitor activities of the target application (or combination of target applications) corresponding to the newly provisioned resource(s) (e.g., accesses of the provisioned resource(s)). For example, the mobile computing device may intercept and/or detect all application programming interface (API) calls, interrupts, messages, and/or other signaling initiated by the target application(s). Monitored activities may include actions such as requesting OS-level services, read/writes to memory or other storage, using more power and/or processor time, queries or changes to system variables or data, initiating communications via network interfaces, polling device component(s) (e.g., sensors), and/or performing any other operations using one or more of the resources of the mobile computing device.

In block 616, the processor of the mobile computing device may update stored activity data for the target application (or combination of target applications) based, at least in part, on the monitoring operations of block 614. In some implementations, the mobile computing device may maintain the history and state of all evaluated applications for a period of time. Such historical activity data may be kept in various data structures associated with individual target applications, such as application profiles. For example, the mobile computing device may update profile data associated with the target application to indicate any API calls, memory accesses, and/or other actions initiated by the target application in response to various provisioning operations. In some implementations, the mobile computing device may store historical activity data in various data structures or profiles associated with combinations of target applications. In some implementations, the operations of blocks 614-616 may be performed using a honeypot system monitoring module 152 as described with reference to FIG. 1.

In determination block 618, the processor of the mobile computing device may determine whether or not any malicious activity by the target application (or combination of target applications). This determination may include evaluating monitored activities of the target application(s) that occur in response to making available or adjusting resources. For example, in response to generating a fake contacts list available for access by the target application(s), the mobile computing device may determine that malicious activity occurred when the contacts list is delivered for transmission via an outbound connection (e.g., Wi-Fi connection, cellular network connections, etc.) accessible to the target application(s). In some implementations, this determination may also include evaluating stored activity data indicating previous activities of the target application(s). For example, when the target application(s) previously copied sensitive data and repeatedly checked for available Wi-Fi connections but did not attempt to transmit the copied data, the mobile computing device may determine malicious activity is occurring when the target application(s) is later observed requesting establishment of a connection with a remote data source. In various implementations, the mobile computing device may identify malicious activity based, at least in part, on observed activity data (e.g., intercepted API calls, interrupts, and/or other signals generated by or otherwise initiated by the target application(s)) that is forwarded to an analyzer in response to the provisioning operations of block 612. In some implementations, the operations of determination block 618 may be performed using a malicious activity detection module 154 as described with reference to FIG. 1.

In response to determining that no malicious activity is detected corresponding to the target application(s) (i.e., determination block 618 = "No"), the mobile computing device may continue with the prediction operations in block 608. In other words, the mobile computing device may iteratively determine how to provision resource(s) and re-provision resources accordingly until the target application(s) responds. For example, based, at least in part, on newly observed behaviors of the target application(s), the mobile computing device may update behavioral predictions and identify new resources to be emulated or otherwise adjusted to trigger the target application(s). Different resources and/or system state data may replace and/or add to previously available resources and/or system state data provided to the target application(s).

In some implementations, the mobile computing device may use honeypot system observations to update the probability of malicious activity by the target application(s) in block 602 and, as a result, may determine the target application(s) is probably not malicious. For example, after a number of iterations of the operations of blocks 608-618, the mobile computing device may determine the probability that the target application(s) is malware to be below a threshold, and remove the target application(s) from the list of potentially malicious applications. When this happens, the mobile computing device may select a next target application(s) in block 606 and continue with the operations of the method 600 focused on that target application(s).

In response to determining that malicious activity is detected in the target application(s) (i.e., determination block 618 = "Yes"), the processor of the mobile computing device may determine the predicted triggering condition(s) were accurate, or note the currently provisioned resources, and store information regarding the currently provisioned resources as satisfying triggering conditions for the target application (or combination of target applications) in block 620.

In some implementations, the mobile computing device may perform various operations in response to detecting malicious activity by the target application (or combination of target applications). For example, based on detected malicious behavior, the mobile computing device may block target application(s) access to certain resources and/or disable the target application(s). As another non-limiting example of operations performed in response to detecting malicious activity, the mobile computing device may perform reporting operations. Accordingly, in optional block 622, the processor of the mobile computing device may transmit a report message indicating the triggering conditions for the target application (or combination of target applications). For example, the mobile computing device may communicate with a server configured to catalog malware data regarding the deployed resources provisioned on the mobile computing device that prompted the target application to exhibit malicious behavior, as well as the type of malicious behavior observed (e.g., the application leaked sensitive data). As another example, the mobile computing device may alert other mobile computing devices (e.g., devices within a vicinity of the mobile computing device or otherwise reachable over a communication medium, etc.) about the deployed resources and the corresponding malicious behavior. Such other devices may choose to monitor respective local applications for similar such settings.

In determination block 624, the processor of the mobile computing device may determine whether or not there are any other potentially malicious applications to monitor. In response to determining that there are other potentially malicious applications to monitor (i.e., determination block 624 = "Yes"), the mobile computing device may select another target application for monitoring in block 606 and continue with the operations of the method 600 focused on that application. In response to determining that there are no other potentially malicious applications to monitor (i.e., determination block 624 = "No"), the mobile computing device may end the method 600.

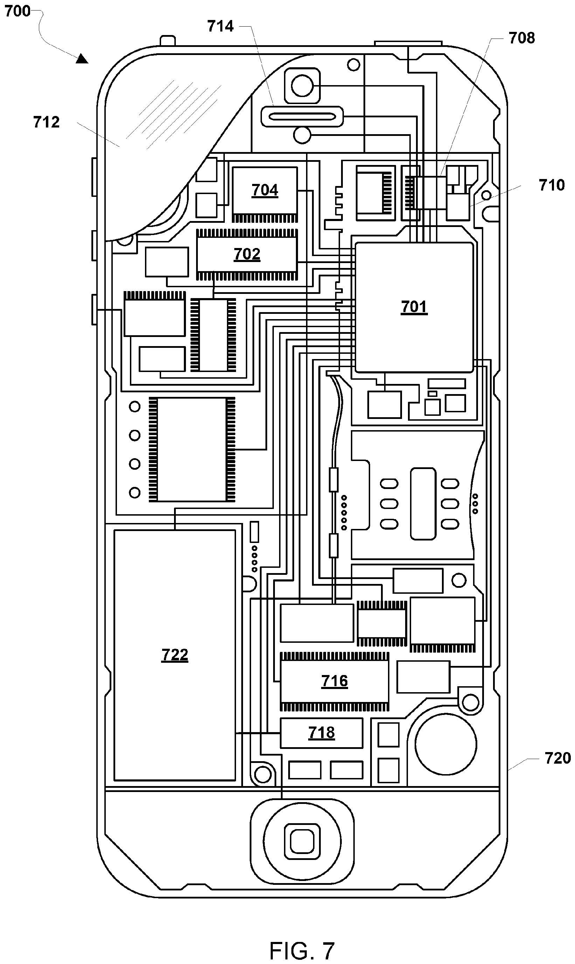

Various forms of mobile computing devices, including personal computers and laptop computers, may be used to implement the various implementations. Such computing devices typically include the components illustrated in FIG. 7, which illustrates an example smartphone mobile computing device 700.

In various implementations, the mobile computing device 700 may include a processor 701 coupled to a touch screen controller 704 and an internal memory 702. The processor 701 may be one or more multicore ICs designated for general or specific processing tasks. The internal memory 702 may be volatile and/or non-volatile memory, and may also be secure and/or encrypted memory, or unsecure and/or unencrypted memory, or any combination thereof. The touch screen controller 704 and the processor 701 may also be coupled to a touch screen panel 712, such as a resistive-sensing touch screen, capacitive-sensing touch screen, infrared sensing touch screen, etc.

The mobile computing device 700 may have one or more radio signal transceivers 708 (e.g., Bluetooth®, ZigBee®, Wi-Fi, radio frequency (RF) transceiver) and antennae 710, for sending and receiving, coupled to each other and/or to the processor 701. The transceivers 708 and antennae 710 may be used with the above-mentioned circuitry to implement the various wireless transmission protocol stacks and interfaces. The mobile computing device 700 may include a cellular network wireless modem chip 716 that enables communication via a cellular network and is coupled to the processor.

The mobile computing device 700 may include a peripheral device connection interface 718 coupled to the processor 701. The peripheral device connection interface 718 may be singularly configured to accept one type of connection, or multiply configured to accept various types of physical and communication connections, common or proprietary, such as USB, FireWire, Thunderbolt, or PCIe. The peripheral device connection interface 718 may also be coupled to a similarly configured peripheral device connection port (not shown).

The mobile computing device 700 may also include speakers 714 for providing audio outputs. The mobile computing device 700 may also include a housing 720, constructed of a plastic, metal, or a combination of materials, for containing all or some of the components discussed herein. The mobile computing device 700 may include a power source 722 coupled to the processor 701, such as a disposable or rechargeable battery. The rechargeable battery may also be coupled to the peripheral device connection port to receive a charging current from a source external to the mobile computing device 700.

The various implementations illustrated and described are provided merely as examples to illustrate various features of the claims. However, features shown and described with respect to any given implementation are not necessarily limited to the associated implementation and may be used or combined with other implementations that are shown and described. Further, the claims are not intended to be limited by any one example implementation.

The various processors described herein may be any programmable microprocessor, microcomputer or multiple processor chip or chips that may be configured by software instructions (applications) to perform a variety of functions, including the functions of the various implementations described herein. In the various devices, multiple processors may be provided, such as one processor dedicated to wireless communication functions and one processor dedicated to running other applications. Typically, software applications may be stored in internal memory before being accessed and loaded into the processors. The processors may include internal memory sufficient to store the application software instructions. In many devices the internal memory may be a volatile or nonvolatile memory, such as flash memory, or a mixture of both. For the purposes of this description, a general reference to memory refers to memory accessible by the processors including internal memory or removable memory plugged into the various devices and memory within the processors.

The foregoing method descriptions and the process flow diagrams are provided merely as illustrative examples and are not intended to require or imply that the operations of the various implementations must be performed in the order presented. As will be appreciated by one of skill in the art the order of operations in the foregoing implementations may be performed in any order. Words such as "thereafter," "then," "next," etc. are not intended to limit the order of the operations; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm operations described in connection with the implementations disclosed herein may be implemented as electronic hardware, computer software, or combinations of both. To clearly illustrate this interchangeability of hardware and software, various illustrative components, blocks, modules, circuits, and operations have been described above generally in terms of respective functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present claims.

The hardware used to implement the various illustrative logics, logical blocks, modules, and circuits described in connection with the implementations disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In various implementations including the method 600, the functions described may be implemented in hardware, software, firmware, or any combination thereof. If implemented in software, the functions may be stored on or transmitted over as one or more instructions or code on a non-transitory processor-readable, computer-readable, or server-readable medium or a non-transitory processor-readable storage medium. The operations of a method or algorithm disclosed herein may be embodied in a processor-executable software module or processor-executable software instructions which may reside on a non-transitory computer-readable storage medium, a non-transitory server-readable storage medium, and/or a non-transitory processor-readable storage medium. In various implementations, such instructions may be stored processor-executable instructions or stored processor-executable software instructions. Tangible, non-transitory computer-readable storage media may be any available media that may be accessed by a computer. By way of example, and not limitation, such non-transitory computer-readable media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc® where disks usually reproduce data magnetically, while discs reproduce data optically with lasers. Combinations of the above should also be included within the scope of non-transitory computer-readable media. Additionally, the operations of a method or algorithm may reside as one or any combination or set of codes and/or instructions on a tangible, non-transitory processor-readable storage medium and/or computer-readable medium, which may be incorporated into a computer program product.

The preceding description of the disclosed implementations is provided to enable any person skilled in the art to make or use the implementation techniques of the claims. Various modifications to these implementations will be readily apparent to those skilled in the art, and the generic principles defined herein may be applied to other implementations without departing from the scope of the claims. Thus, the present disclosure is not intended to be limited to the implementations shown herein but is to be accorded the widest scope consistent with the following claims and the principles and novel features disclosed herein.

## Claims

1. A method (600) implemented in a honeypot system for triggering malicious activities by applications, comprising:
determining (604), via a processor of a computing device, whether an application currently executing on the computing device is potentially malicious;
designating (606) the application as the target application in response to determining that the application is potentially malicious;
predicting (608), via the processor, a triggering condition of the target application in response to determining that the target application is potentially malicious, wherein the triggering condition will cause the target application to exhibit malicious activities;
provisioning (612), via the processor, one or more resources based, at least in part, on the predicted triggering condition;
monitoring (614), via the processor, activities of the target application corresponding to the provisioned one or more resources; and
determining (618), via the processor, whether or not the target application is a malicious application based, at least in part, on the monitored activities.

2. The method (600) of claim 1, wherein monitoring (614), via the processor, activities of the target application comprises monitoring a group of applications that may have the same triggering condition.

3. The method (600) of claim 1, wherein determining (604), via the processor, whether the application currently executing on the computing device is potentially malicious comprises:
analyzing, via the processor, at least one of a permission of the application corresponding to accessing resources of the computing device and stored activity data indicating previous activities of the application.

4. The method (600) of claim 1, wherein the one or more resources comprises one or both of one or more device components and data.

5. The method (600) of claim 4, wherein the one or more device components comprise at least one member of the group consisting of an installed application, an operating system, a network interface, a processing unit, a data storage unit, a coupled device, an output unit, an input unit, and a sensor.

6. The method (600) of claim 4, wherein the data comprises at least one member of the group consisting of a contact list, a stored file, personal information, networking conditions data, subscription information, location information, system information, known vulnerability information, and sensor data.

7. The method (600) of claim 1, wherein predicting (608), via the processor, the triggering condition of the target application in response to determining the target application is potentially malicious comprises:
evaluating, via the processor, at least one of a permission of the target application, any resources previously accessible to the target application, and stored activity data indicating previous activities of the target application.

8. The method (600) of claim 1, wherein provisioning (612), via the processor, the one or more resources based, at least in part, on the predicted triggering condition comprises at least one of:
adjusting, via the processor, a resource previously visible to the target application based, at least in part, on the predicted triggering condition; and
configuring, via the processor, a resource that was previously invisible to the target application so that the resource becomes visible to the target application.

9. The method of claim 1, wherein provisioning (612), via the processor, the one or more resources based, at least in part, on the predicted triggering condition comprises:
creating, via the processor, a virtual resource based, at least in part, on the predicted triggering condition, wherein the virtual resource represents an emulated device component or data that is not actually present within or supported by the computing device.

10. The method (600) of claim 1, wherein monitoring (614), via the processor, activities of the target application corresponding to the provisioned one or more resources comprises:
detecting, via the processor, an application programming interface (API) call made by the target application.

11. The method (600) of claim 1, wherein determining (618), via the processor, whether the target application is a malicious application based, at least in part, on the monitored activities comprises:
evaluating, via the processor, the monitored activities and stored activity data indicating previous activities of the target application.

12. The method (600)(of claim 1, further comprising updating (616), via the processor, stored activity data for the target application including information regarding resources that were provisioned in response to determining that the target application is a malicious application.

13. The method (600) of claim 1, further comprising transmitting (622) a report message indicating the triggering condition for the target application in response to determining that the target application is a malicious application.

14. A computing device (102), comprising:
means for determining (604), whether an application currently executing on the computing device is potentially malicious;
means for designating (606) the application as the target application in response to determining that the application is potentially malicious;
means for predicting (608) a triggering condition of one or more target applications in response to determining that the target application is potentially malicious, wherein the triggering condition will cause the target application to exhibit malicious activities;
means for provisioning (612) one or more resources based, at least in part, on the predicted triggering condition;
means for monitoring (614) activities of the target application corresponding to the provisioned one or more resources; and
means for determining (618) whether or not any of the target application is malicious based, at least in part, on the monitored activities.

15. Computer program, comprising instructions that when carried out by a processor cause the processor to perform a method (600) according to any one of claims 1 to 13.

## Patentansprüche

1. Ein Verfahren (600), welches in einem Honeypot-System implementiert ist, zum Auslösen bösartiger Aktivitäten durch Anwendungen, wobei das Verfahren umfasst:
Bestimmen (604), mittels eines Prozessors einer Rechenvorrichtung, ob eine Anwendung, die derzeit auf der Rechenvorrichtung ausgeführt wird, potenziell bösartig ist;
Markieren (606) der Anwendung als Zielanwendung als Reaktion auf das Bestimmen, dass die Anwendung potenziell bösartig ist;
Vorhersagen (608), mittels des Prozessors, einer Auslösebedingung der Zielanwendung als Reaktion auf das Bestimmen, dass die Zielanwendung potenziell bösartig ist, wobei
die Auslösebedingung die Zielanwendung dazu veranlasst, bösartige Aktivitäten zu zeigen;
Bereitstellen (612), mittels des Prozessors, einer oder mehrerer Ressourcen, die zumindest teilweise auf der vorhergesagten Auslösebedingung basieren;
Überwachen (614), mittels des Prozessors, von Aktivitäten der Zielanwendung, die der bereitgestellten einen oder mehreren Ressourcen entsprechen; und
Bestimmen (618), mittels des Prozessors, ob es sich bei der Zielanwendung um eine bösartige Anwendung handelt oder nicht, basierend zumindest teilweise auf den überwachten Aktivitäten.

2. Das Verfahren (600) nach Anspruch 1, wobei das Überwachen (614), mittels des Prozessors, der Aktivitäten der Zielanwendung das Überwachen einer Gruppe von Anwendungen umfasst, die die gleiche Auslösebedingung haben können.

3. Das Verfahren (600) nach Anspruch 1, wobei das Bestimmen (604), mittels des Prozessors, ob die Anwendung, die derzeit auf der Rechenvorrichtung ausgeführt wird, potenziell bösartig ist, umfasst:
Analysieren, mittels des Prozessors, einer Genehmigung der Anwendung, die Zugriff-Ressourcen der Rechenvorrichtung entspricht und/oder gespeicherter Aktivitätsdaten, die frühere Aktivitäten der Anwendung anzeigen.

4. Das Verfahren (600) nach Anspruch 1, wobei die eine oder mehreren Ressourcen eine oder beide von einer oder mehreren Vorrichtungskomponenten und Daten umfassen.

5. Das Verfahren (600) nach Anspruch 4, wobei die eine oder die mehreren Vorrichtungskomponenten mindestens ein Mitglied der Gruppe umfassen, die aus einer installierten Anwendung, einem Betriebssystem, einer Netzwerkschnittstelle, einer Verarbeitungseinheit, einer Datenspeichereinheit, einem gekoppelten Gerät, einer Ausgabeeinheit, einer Eingabeeinheit und einem Sensor besteht.

6. Das Verfahren (600) nach Anspruch 4, wobei die Daten mindestens ein Mitglied der Gruppe umfassen, die aus einer Kontaktliste, einer gespeicherten Datei, persönlichen Informationen, Netzwerk-Zustandsdaten, Anmeldeinformationen, Standortinformationen, Systeminformationen, bekannte Schwachstellen-Informationen und Sensordaten besteht.

7. Das Verfahren (600) nach Anspruch 1, wobei das Vorhersagen (608), mittels des Prozessors, der Auslösebedingung der Zielanwendung als Reaktion auf das Bestimmen, dass die Zielanwendung potenziell bösartig ist, umfasst:
Auswerten, mittels des Prozessors, einer Genehmigung der Zielanwendung, aller Ressourcen, auf die die Zielanwendung zuvor Zugriff hatte, und/oder gespeicherter Aktivitätsdaten, die frühere Aktivitäten der Zielanwendung anzeigen.

8. Das Verfahren (600) nach Anspruch 1, wobei das Bereitstellen (612), mittels des Prozessors, einer oder mehrerer Ressourcen, die zumindest teilweise auf der vorhergesagten Auslösebedingung basieren, zumindest eines der folgenden umfasst:
Anpassen, mittels des Prozessors, einer zuvor für die Zielanwendung sichtbaren Ressource zumindest teilweise auf der Grundlage der vorhergesagten Auslösebedingung; und
Konfigurieren, mittels des Prozessors, einer Ressource, die zuvor für die Zielanwendung unsichtbar war, so dass die Ressource für die Zielanwendung sichtbar wird.

9. Das Verfahren nach Anspruch 1, wobei das Bereitstellen (612), mittels des Prozessors, der einen oder der mehreren Ressourcen, die zumindest teilweise auf der vorhergesagten Auslösebedingung basieren, umfasst:
Erzeugen, mittels des Prozessors, einer virtuellen Ressource, die zumindest teilweise auf der vorhergesagten Auslösebedingung basiert, wobei die virtuelle Ressource eine emulierte Vorrichtungskomponente oder Daten darstellt, die nicht tatsächlich in der Rechenvorrichtung vorhanden sind oder von dieser unterstützt werden.

10. Das Verfahren (600) nach Anspruch 1, wobei das Überwachen (614), mittels des Prozessors, Aktivitäten der Zielanwendung, die der bereitgestellten einen oder mehreren Ressourcen entsprechen, umfasst:
Erkennen, mittels des Prozessors, eines Programmierschnittstellen-Aufrufs (Application Programming Interface, API-Call), der durch die Zielanwendung ausgeführt wurde.

11. Das Verfahren (600) nach Anspruch 1, wobei das Bestimmen (618), mittels des Prozessors, ob es sich bei der Zielanwendung um eine bösartige Anwendung handelt, basierend zumindest teilweise auf den überwachten Aktivitäten, umfasst:
Auswerten, mittels des Prozessors, der überwachten Aktivitäten und der gespeicherten Aktivitätsdaten, die frühere Aktivitäten der Zielanwendung anzeigen.

12. Das Verfahren (600) nach Anspruch 1, ferner umfassend:
Aktualisieren (616), mittels des Prozessors, gespeicherter Aktivitätsdaten für die Zielanwendung, einschließlich Informationen über Ressourcen, die als Reaktion auf das Bestimmen, dass die Zielanwendung eine bösartige Anwendung ist, bereitgestellt wurden.

13. Das Verfahren (600) nach Anspruch 1, ferner umfassend:
Übertragen (622) einer Berichtsnachricht, die Auslösebedingung für die Zielanwendung als Reaktion auf das Bestimmen, dass die Zielanwendung eine bösartige Anwendung ist, angibt.

14. Eine Rechenvorrichtung (102), umfassend:
Mittel zum Bestimmen (604), ob eine Anwendung, die derzeit auf der Rechenvorrichtung ausgeführt wird, potenziell bösartig ist;
Mittel zum Markieren (606) der Anwendung als Zielanwendung als Reaktion auf das Bestimmen, dass die Anwendung potenziell bösartig ist;
Mittel zum Vorhersagen (608) einer Auslösebedingung einer oder mehrerer Zielanwendungen als Reaktion auf das Bestimmen, dass die Zielanwendung potenziell bösartig ist, wobei
die Auslösebedingung die Zielanwendung dazu veranlasst, bösartige Aktivitäten zu zeigen;
Mittel zum Bereitstellen (612), einer oder mehrerer Ressourcen, die zumindest teilweise auf der vorhergesagten Auslösebedingung basieren;
Mittel zum Überwachen (614) von Aktivitäten der Zielanwendung, die der bereitgestellten einen oder mehreren Ressourcen entsprechen; und
Mittel zum Bestimmen (618), ob es sich bei der Zielanwendung um eine bösartige Anwendung handelt oder nicht, basierend zumindest teilweise auf den überwachten Aktivitäten.

15. Computerprogramm, umfassend Instruktionen, die, wenn sie von einem Prozessor ausgeführt werden, den Prozessor veranlassen, ein Verfahren (600) nach einem der Ansprüche 1 bis 13 durchzuführen.

## Revendications

1. Un procédé (600) implémenté dans un système honeypot afin de déclencher des activités malveillantes par des applications, comprenant :
la détermination (604), via un processeur d'un dispositif informatique, si une application en cours d'exécution sur le dispositif informatique est potentiellement malveillante ;
la désignation (606) de l'application comme étant l'application cible en réponse à la détermination que l'application est potentiellement malveillante ;
la prédiction (608), via le processeur, d'une condition de déclenchement de l'application cible en réponse à la détermination que l'application cible est potentiellement malveillante, où la condition de déclenchement amènera l'application cible à déployer des activités malveillantes ;
la mise à disposition (612), via le processeur, d'une ou plusieurs ressources, au moins en partie sur la base de la condition de déclenchement prédite ;
la surveillance (614), via le processeur, d'activités de l'application cible correspondant aux une ou plusieurs ressources mises à disposition ; et
la détermination (618), via le processeur, si l'application cible est une application malveillante ou non, au moins en partie sur la base des activités surveillées.

2. Le procédé (600) selon la revendication 1, dans lequel la surveillance (614), via le processeur, d'activités de l'application cible comprend la surveillance d'un groupe d'applications qui peuvent avoir la même condition de déclenchement.

3. Le procédé (600) selon la revendication 1, dans lequel la détermination (604), via le processeur, si l'application en cours d'exécution sur le dispositif informatique est potentiellement malveillante comprend : l'analyse, via le processeur, d'au moins l'une parmi une permission de l'application correspondant à des ressources d'accès du dispositif informatique, et des données d'activité stockées indiquant des activités antérieures de l'application.

4. Le procédé (600) selon la revendication 1, dans lequel les une ou plusieurs ressources comprennent l'un, ou l'un et l'autre, parmi un ou plusieurs composants de dispositif et une donnée.

5. Le procédé (600) selon la revendication 4, dans lequel les un ou plusieurs composants de dispositif comprennent au moins un élément du groupe formé par une application installée, un système d'exploitation, une interface réseau, une unité de traitement, une unité de stockage de données, un dispositif couplé, une unité de sortie, une unité d'entrée et un capteur.

6. Le procédé (600) selon la revendication 4, dans lequel les données comprennent au moins un élément du groupe formé par une liste de contacts, un fichier stocké, une information personnelle, des données de conditions de mise en réseau, une information d'abonnement, une information de localisation, une information système, une information de vulnérabilité connue et des données de capteur.

7. Le procédé (600) selon la revendication 1, dans lequel la prédiction (608), via le processeur, de la condition de déclenchement de l'application cible en réponse à la détermination que l'application cible est potentiellement malveillante comprend :
l'évaluation, via le processeur, d'au moins l'une parmi une permission de l'application cible, toute ressource accessible auparavant pour l'application cible, et des données d'activité stockées indiquant des activités antérieures de l'application cible.

8. Le procédé (600) selon la revendication 1, dans lequel la mise à disposition (612), via le processeur, des une ou plusieurs ressources au moins en partie sur la base de la condition de déclenchement prédite comprend au moins l'un parmi :
l'ajustement, via le processeur, d'une ressource visible auparavant pour l'application cible, au moins en partie sur la base de la condition de déclenchement prédite ; et
la configuration, via le processeur, d'une ressource qui était invisible auparavant pour l'application cible, de telle sorte que la ressource devienne visible pour l'application cible.

9. Le procédé selon la revendication 1, dans lequel la mise à disposition (612), via le processeur, des une ou plusieurs ressources au moins en partie sur la base de la condition de déclenchement prédite comprend :
la création, via le processeur, d'une ressource virtuelle au moins en partie sur la base de la condition de déclenchement prédite, dans lequel la ressource virtuelle représente un composant de dispositif émulé ou des données qui ne sont ni effectivement présentes dans le dispositif informatique ni prises en charge par lui.

10. Le procédé (600) selon la revendication 1, dans lequel la surveillance (614), via le processeur, d'activités de l'application cible correspondant aux une ou plusieurs ressources mises à disposition comprend :
la détection, via le processeur, d'un appel par l'application cible à une interface de programmation applicative (API).

11. Le procédé (600) selon la revendication 1, dans lequel la détermination (618), via le processeur, si l'application cible est une application malveillante au moins en partie sur la base des activités surveillées comprend :
l'évaluation, via le processeur, des activités surveillées et de données d'activité stockées indiquant des activités antérieures de l'application cible.

12. Le procédé (600) selon la revendication 1, comprenant en outre la mise à jour (616), via le processeur, des données d'activité stockées pour l'application cible incluant des informations concernant des ressources qui ont été mises à disposition en réponse à la détermination que l'application cible est une application malveillante.

13. Le procédé (600) selon la revendication 1, comprenant en outre la transmission (622) d'un message de rapport indiquant la condition de déclenchement de l'application cible en réponse à la détermination que l'application cible est une application malveillante.

14. Un dispositif informatique (102), comprenant :
des moyens permettant de déterminer (604) si une application en cours d'exécution sur le dispositif informatique est potentiellement malveillante ;
des moyens permettant de désigner (606) l'application comme étant l'application cible en réponse à la détermination que l'application est potentiellement malveillante ;
des moyens permettant de prédire (608) une condition de déclenchement d'une ou plusieurs applications cibles en réponse à la détermination que l'application cible est potentiellement malveillante, où la condition de déclenchement amènera l'application cible à déployer des activités malveillantes ;
des moyens permettant de mettre à disposition (612) une ou plusieurs ressources au moins en partie sur la base de la condition de déclenchement prédite ;
des moyens permettant de surveiller (614) des activités de l'application cible correspondant aux une ou plusieurs ressources mises à disposition ; et
des moyens permettant de déterminer (618) si l'une quelconque de l'application cible est malveillante ou non, au moins en partie sur la base des activités surveillées.

15. Un programme d'ordinateur comprenant des instructions qui, lorsqu'elles sont mises en œuvre par un processeur, amènent le processeur à mettre en œuvre un procédé (600) selon l'une des revendications 1 à 13.
